# EUROPÄISCHE PATENTANMELDUNG

(11) **EP 1 282 314 A2**
(43) Veröffentlichungstag der Anmeldung: **05.02.2003**
(21) Anmeldenummer: 02015872.1
(22) Anmeldetag: 16.07.2002
(51) Int. Cl.: H04N 7/15

(54) **Verfahren und Endeinrichtung zur Mehrpunktkommunikation**

(30) Priorität: 03.08.2001 DE 10138267
(71) Anmelder: SIEMENS AKTIENGESELLSCHAFT, 80333 München (DE)
(72) Erfinder: Burger, Manfred, 83714 Miesbach (DE); Hohl, Hubertus, Dr., 85540 Haar (DE); Lederer, Thomas, 81379 München (DE)

(57) **Zusammenfassung**

Erfindungsgemäß werden im Rahmen einer Mehrpunktverbindung zwischen einer ersten Endeinrichtung (C0) und weiteren Endeinrichtungen (C1, C2) zu übertragende Kommunikationsdatenströme (V0, V1, V2) von den weiteren Endeinrichtungen (C1, C2) zur ersten Endeinrichtung (C0) übertragen. Durch die erste Endeinrichtung (C0) werden die empfangenen Kommunikationsdatenströme (V1, V2) zu den weiteren an der Mehrpunktverbindung beteiligten Endeinrichtungen (C1, C2) dergestalt verteilt, dass jede der weiteren Endeinrichtungen (C1, C2) die von den jeweils anderen Endeinrichtungen stammenden Kommunikationsdatenströme empfängt.

## Beschreibung

Zeitgemäße Kommunikationssysteme unterstützen neben Zweipunktverbindungen in der Regel auch Mehrpunktverbindungen, d.h. Verbindungen zwischen drei oder mehr Teilnehmern. Derartige Mehrpunktverbindungen können beispielsweise zwischen Endeinrichtungen zur Sprach-, Videound/oder Multimediakommunikation oder zwischen Personalcomputern aufgebaut werden, um beispielsweise Sprach- , Video- und/oder Multimediakonferenzschaltungen zu realisieren.

Im Rahmen einer solchen Konferenzschaltung sind die Endeinrichtungen der Konferenzteilnehmer als Quelle von Kommunikationsdatenströmen, wie z.B. Sprach-, Video- und/oder Multimediadatenströmen, zu betrachten. Zur Realisierung der Konferenzschaltung sind jedem Konferenzteilnehmer alle Kommunikationsdatenströme der anderen beteiligten Konferenzteilnehmer zu übermitteln. Bei einer Konferenzschaltung mit N Konferenzteilnehmern sind somit N*(N-1) unidirektionale Kommunikationsdatenströme aufzubauen und in koordinierter Weise zu übertragen. Bei einer direkten Übertragung aller Kommunikationsdatenströme von allen Konferenzteilnehmern zu allen anderen Konferenzteilnehmern steigt allerdings der hierfür erforderliche Koordinationsaufwand und die benötigten Übertragungsbandbreiten mit zunehmender Anzahl von Konferenzteilnehmern stark an.

Zur Vermeidung dieses hohen Koordinationsaufwandes werden in modernen paketorientierten Kommunikationsnetzen sogenannte Konferenzserver (MCU: Multipoint Control Unit) als zentrale Steuerungseinheiten im Kommunikationsnetz eingesetzt. Ein solcher Konferenzserver empfängt zentral die von den Endeinrichtungen der Konferenzteilnehmer gesendeten Kommunikationsdatenströme und verteilt diese zu den Endeinrichtungen der einzelnen Konferenzteilnehmer. Beim Aufbau einer Konferenzschaltung mittels eines Konferenzservers wählen sich die Konferenzteilnehmer einzeln beim Konferenzserver ein und werden von diesem zur Konferenzschaltung hinzugeschaltet. Derartige Konferenzserver sind beispielsweise aus Kapitel 6.8 der ITU-T Empfehlung H.323 bekannt.

Ein Einsatz eines Konferenzservers bedingt jedoch einen hohen zusätzlichen Hardware- und Softwareaufwand. Insbesondere ist bei den Endeinrichtungen der Konferenzteilnehmer zusätzlicher Verwaltungsaufwand erforderlich, z.B. zum An- und Abmelden beim Konferenzserver und zur Reservierung von Übertragungsressourcen auf den Konferenzserver. Zudem erfordert diese Art des Konferenzaufbaus, dass sich die Konferenzteilnehmer vorab über einen Konferenzzeitpunkt verständigen. Auch dies ist in der Regel sehr zeitaufwändig.

Es ist Aufgabe der vorliegenden Erfindung, ein weniger aufwändiges Verfahren zur Mehrpunktkommunikation anzugeben. Es ist weiterhin Aufgabe der Erfindung eine Endeinrichtung zur Realisierung des Verfahrens anzugeben.

Gelöst wird diese Aufgabe durch ein Verfahren mit den Merkmalen des Patentanspruchs 1 und durch eine Endeinrichtung mit den Merkmalen des Patentanspruchs 10.

Erfindungsgemäß werden im Rahmen einer Mehrpunktverbindung zu übertragende Kommunikationsdatenströme, wie z.B. Sprach-, Video- und/oder Multimediadatenströme, lokal durch eine erste an der Mehrpunktverbindung beteiligte Endeinrichtung zu weiteren an der Mehrpunktverbindung beteiligten Endeinrichtungen verteilt. Die an der Mehrpunktverbindung beteiligten Endeinrichtungen können beispielsweise Endgeräte, wie z.B. Sprachtelefone, Videotelefone oder Personalcomputer und/oder darauf ablaufende Anwendungsprogramme oder Clientanwendungen sein.

Ein wesentlicher Vorteil der Erfindung besteht darin, dass zum Herstellen einer Mehrpunktverbindung keine zusätzliche zentrale Steuereinheit, wie z.B. ein Konferenzserver erforderlich ist. Weiterhin resultiert die Erfindung in einer geringeren Netzbelastung und einem geringeren Koordinationsaufwand zum Aufbau einer Mehrpunktverbindung, da insbesondere keine Zusatzverbindung zu einem zentralen Konferenzserver und keine Reservierung von Übertragungsressourcen auf diesem Konferenzserver erforderlich ist. Das erfindungsgemäße Verfahren lässt sich damit insbesondere beim Aufbau einer sogenannten Ad-hoc-Konferenz aus einer sog. Peer-to-Peer-Gesprächssituation heraus sehr flexibel und kostengünstig anwenden.

Für die Teilnehmer an den weiteren Endeinrichtungen fällt kein zusätzlicher Verwaltungsaufwand an. Darüber hinaus muss bei keiner weiteren Endeinrichtung eine spezifische Konferenzfunktionalität, wie z.B. An- und Abmelden bei einem Konferenzserver, implementiert sein. Eine Mehrpunktverbindung kann zudem auf einfache Weise dynamisch von der ersten Endeinrichtung aus verwaltet werden, z.B. durch Hinzunahme weiterer Teilnehmer oder durch Abmelden von Teilnehmern, ohne dass eine spezifische Reaktion von Seiten der weiteren Endeinrichtungen erforderlich wäre.

Vorteilhafte Ausführungsformen und Weiterbildungen der Erfindung sind in den abhängigen Ansprüchen angegeben.

Nach einer vorteilhaften Ausführungsform der Erfindung kann die Mehrpunktverbindung von der ersten Endeinrichtung durch einen Aufbau von Zweipunktverbindungen, die leitungs- oder paketvermittelt sein können, zu den weiteren Endeinrichtungen initiiert werden. Über die aufgebauten Zweipunktverbindungen werden die Kommunikationsdatenströme übertragen. Die zentrale Initiierung der Mehrpunktverbindung durch den Teilnehmer an der ersten Endeinrichtung wird die weitere Verwaltung der Mehrpunktverbindung beträchtlich vereinfacht.

Gemäß einer Ausführungsform der Erfindung können die von der ersten Endeinrichtung zu einer der weiteren Endeinrichtungen zu übertragenden Kommunikationsdatenströme zusammen über eine gemeinsame Zweipunktverbindung zwischen der ersten Endeinrichtung und der betreffenden weiteren Endeinrichtung übertragen werden. Zur Übertragung über eine gemeinsame Zweipunktverbindung können die betreffenden Kommunikationsdatenströme in der ersten Endeinrichtung, z.B. durch Multiplexen, zu einem einzelnen Datenstrom zusammengeführt werden. Eine diesen zusammengesetzten Datenstrom empfangende, weitere Endeinrichtung kann die im zusammengesetzten Datenstrom enthaltenen Kommunikationsdatenströme, z.B. durch Demultiplexen, wieder trennen und für eine lokale, getrennte Ausgabe aufbereiten. Eine Übertragung der Kommunikationsdatenströme über eine gemeinsame Zweipunktverbindung hat den Vorteil, dass durch die betreffende weitere Endeinrichtung insgesamt nur zwei unidirektionale Zweipunktverbindungen oder eine bidirektionale Zweipunktverbindung zu verwalten sind.

Gemäß einer weiteren Ausführungsform der Erfindung können die von der ersten Endeinrichtung zu einer weiteren Endeinrichtung zu übertragenden Kommunikationsdatenströme über separate Zweipunktverbindungen zwischen der ersten Endeinrichtung und der zweiten Endeinrichtung übertragen werden. Die Separierung der einzelnen zu übertragenden Kommunikationsdatenströme in separate Zweipunktverbindungen hat den Vorteil, dass der Aufwand für das Zusammenführen der Kommunikationsdatenströme durch die erste Endeinrichtung und für das Trennen der Kommunikationsdatenströme durch die betreffenden weiteren Endeinrichtungen entfallen kann.

Vorteilhafterweise können die Zweipunktverbindungen als sog. Peer-to-Peer-Verbindungen, d.h. Zweipunktverbindungen zwischen hinsichtlich der Verbindung gleichberechtigten Verbindungspartnern, aufgebaut werden.

Nach einer vorteilhaften Weiterbildung der Erfindung kann im Rahmen des Empfangs der Kommunikationsdatenströme durch die erste Endeinrichtung auch der von dieser selbst stammende Kommunikationsdatenstrom logisch von der ersten Endeinrichtung empfangen werden. Damit empfängt die erste Kommunikationseinrichtung - zumindest logisch - die von allen an der Mehrpunktverbindung beteiligten Endeinrichtungen (inklusive ihr selbst) stammenden Kommunikationsdatenströme. Weiterhin können im Rahmen des Übertragens der Kommunikationsdatenströme durch die erste Endeinrichtung die von den weiteren Kommunikationseinrichtungen stammenden Kommunikationsdatenströme logisch an die erste Kommunikationseinrichtung übertragen werden. Damit werden die durch die erste Endeinrichtung übertragenden Kommunikationsdatenströme - zumindest logisch - zu allen an der Mehrpunktverbindung beteiligten Endeinrichtungen (inklusive der ersten Endeinrichtung selbst) übertragen. Durch diese zusätzlichen, logischen Übertragungen wird die logische Organisation und Koordination der Übertragung der Kommunikationsdatenströme beträchtlich vereinfacht.

Gemäß einer weiteren vorteilhaften Ausführungsform der Erfindung können die Kommunikationsdatenströme über ein paketorientiertes Kommunikationsnetz übertragen werden. Insbesondere können hierbei Übertragungsprotokolle aus der sog. TCP/IP-Protokollfamilie verwendet werden.

Besonders vorteilhaft lässt sich die Erfindung auf Videokonferenzschaltungen anwenden, bei denen Bewegtbildströme in Echtzeit zu übertragen sind. Bei den hierfür erforderlichen, hohen Datenübertragungsraten ist die durch die Erfindung erzielbare Verringerung des Verwaltungsaufwandes und der Netzbelastung besonders nutzbringend.

Ein Ausführungsbeispiel der Erfindung wird nachfolgend anhand der Zeichnung näher erläutert.

Dabei zeigen jeweils in schematischer Darstellung:
Fig 1 und Fig 2 jeweils drei Endeinrichtungen beim Austausch von Kommunikationsdatenströmen im Rahmen einer Konferenzschaltung und
Fig 3 ein Blockdiagramm einer erfindungsgemäßen Endeinrichtung.

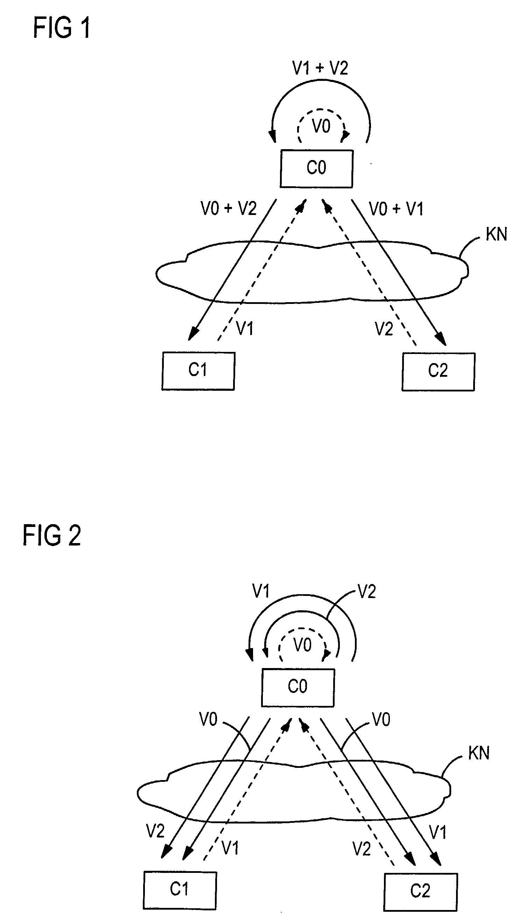

In den **Fig 1 und 2** sind jeweils drei, über ein Kommunikationsnetz KN gekoppelte Endeinrichtungen C0, C1 und C2, z.B. zur Sprach-, Video- und/oder Multimediakommunikation, schematisch dargestellt. Für das vorliegende Ausführungsbeispiel sei angenommen, dass die Endeinrichtungen C0, C1 und C2 als auf einem Personalcomputer (nicht dargestellt) ablaufende, videofähige Clientanwendungen, im Folgenden kurz als Clients bezeichnet, realisiert sind. Das Kommunikationsnetz KN ist vorzugsweise als paketvermitteltes Kommrinikationsnetzz ausgestaltet, dessen Übertragungsprotokolle auf der TCP/IP-Protokollfamilie basieren.

Die Clients C0, C1 und C2 sind miteinander im Rahmen einer Mehrpunktverbbindung verbunden, die in vorliegenden Ausführungsbeispiel als Videokonferenzschaltung ausgestaltet ist.

Der Aufbau der Videokonferenzschaltung wird vom Client C0 initiiert. Zu diesem Zweck baut der Client C0 sukzessive Zweipunktverbindungen, vorzugsweise sog. Peer-to-Peer-Verbindungen, zu den Endeinrichtungen aller anderen Konferenzteilnehmer, hier zu den Clients C1 und C2, über das Kommunikationsnetz KN auf. Der Aufbau der Zweipunktverbindungen kann beispielsweise durch Anwahl der Clients C1 und C2 mittels einer Rufnummer erfolgen.

Nach Aufbau der Zweipunktverbindung vom Client C0 zum Client C1 wird von diesem im Rahmen der Videokonferenzschaltung ein Kommunikationsdatenstrom in Form eines Videodatenstroms V1 über die aufgebaute Zweipunktverbindung zum Client C0 übertragen. Entsprechend wird nach Aufbau der Zweipunktverbindung vom Client C0 zum Client C2 ein Kommunikationsdatenstrom in Form eines Videodatenstroms V2 über diese Zweipunktverbindung vom Client C2 zum Client C0 übertragen. Darüber hinaus empfängt der Client C0 einen Videodatenstrom V0 von seiner eigenen Video-Ein/Ausgabe IO. Die vom Client C0 jeweils empfangenen Videodatenströme V0, V1 und V2 werden in den Figuren durch strichlierte Pfeile veranschaulicht.

Mit dem Empfang der Videodatenströme V0, V1 und V2 liegen alle im Rahmen der Videokonferenzschaltung zu verteilenden Videodatenströme im Client C0 vor. Durch den Client C0 werden nunmehr jedem an der Videokonferenzschaltung beteiligten Client C0, C1 und C2 die von den jeweils anderen Clients stammenden Videodatenströme zugeordnet. Im vorliegenden Ausführungsbeispiel werden somit dem Client C1 die Videodatenströme V0 und V2, dem Client C2 die Videodatenströme V0 und V1 und den Client C0 die Videodatenströme V1 und V2 zugeordnet. Der Client C0 überträgt dann die einem jeweiligem Client, hier C0, C1 und C2, zugeordneten Videodatenströme zu diesem jeweiligem Client.

Die Übertragung der einem Client zugeordneten Videodatenströme zu diesem Client kann auf unterschiedliche Weise erfolgen:

Eine erste Verfahrensvariante wird durch **Fig 1** veranschaulicht. Hierbei werden die zu einem jeweiligem Client C0, C1 bzw. C2 zu übertragenden Videodatenströme (V1 und V2 zu C0, V0 und V2 zu C1 sowie V0 und V1 zu C2), zumindest logisch, innerhalb einer gemeinsamen Zweipunktverbindung übertragen. Die jeweiligen Zweipunktverbindungen und die jeweilige Übertragungsrichtung sind in Fig 1 mittels durchgezogener Pfeile veranschaulicht. Zur Übertragung mehrerer Videodatenströme über eine gemeinsame Zweipunktverbindung werden die betreffenden Videodatenströme im Sender, hier C0, zusammengeführt und beim jeweiligem Empfänger, hier C0, C1 bzw. C2, wieder getrennt und zur getrennten Anzeige aufbereitet. Die Videodatenströme können hierbei z.B. durch Mischen oder Multiplexen zusammengeführt und durch Demultiplexen wieder getrennt werden.

Eine zweite Verfahrensvariante für die Übertragung der Videodatenströme durch den Client C0 wird durch **Fig 2** veranschaulicht. Hierbei wird jeder zu einem Client C0, C1 bzw. C2 zu übertragende Videodatenstrom, zumindest logisch, über eine separate Zweipunktverbindung zum betreffenden Empfängerclient C0, C1 bzw. C2 übertragen. Im vorliegenden Ausführungsbeispiel sind hierfür vom Client C0 zu jedem Empfängerclient C0, C1 bzw. C2, zumindest logisch, zwei separate Zweipunktverbindungen aufzubauen. In Fig 2 sind diese Zweipunktverbindungen und die jeweilige Übertragungsrichtung mittels durchgezogener Pfeile angedeutet. Die Verwendung separater Zweipunktverbindungen hat den Vorteil, dass eine Zusammenführung von Videodatenströmen durch den Client C0 und eine Trennung dieser Videodatenströme beim jeweiligen Empfängerclient C0, C1 bzw. C2 entfallen kann.

Die zur Übertragung der Videodatenströme aufzubauenden Zweipunktverbindungen werden vorzugsweise als Peer-to-Peer-Verbindungen realisiert.

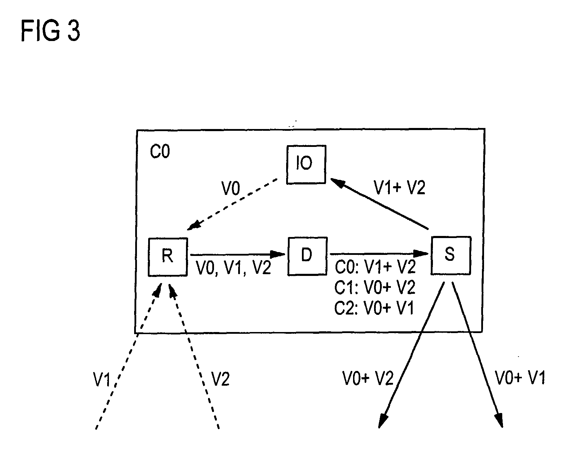

In **Fig 3** ist ein Blockdiagramm des erfindungsgemäßen Clients C0 dargestellt. Der Client C0 enthält als Funktionskomponenten eine Video-Ein/Ausgabe IO, eine Datenempfangseinrichtung R eine Datenverteilungseinrichtung D, sowie eine Datensendeeinrichtung S. Die Video-Ein/Ausgabe IO bildet eine Videodatenquelle bzw. -Senke. Die angegebenen Funktionskomponenten können beispielsweise mittels Softwaremodulen realisiert sein. Durch die Datenempfangseinrichtung R werden - wie durch strichlierte Pfeile angedeutet - der Videodatenstrom V1 vom Client C1, der Videodatenstrom V2 vom Client C2 sowie der Videodatenstrom V0 von der eigenen Video-Ein/Ausgabe I0 des Clients C0 empfangen. Die empfangenen Videodatenströme V0, V1 und V2 werden von der Datenempfangseinrichtung R zur Datenverteilungseinrichtung D übertragen. Durch die Datenverteilungseinrichtung D werden jedem der Clients C0, C1 bzw. C2 die von den jeweils anderen Clients stammenden Videodatenströme zugeordnet. Im vorliegenden Ausführungsbeispiel werden somit dem Client C0 die Videodatenströme V1 und V2, dem Client C1 die Videodatenströme V0 und V2 sowie dem Client C2 die Videodatenströme V0 und V1 zugeordnet. Die Videodatenströme sowie deren Zuordnung werden von der Datenverteilungseinrichtung D zur Datensendeeinrichtung S übermittelt. Diese überträgt die einem jeweiligem Client C0, C1 bzw. C2 zugeordneten Videodatenströme, zumindest logisch, zu diesem Client. D.h. im vorliegenden Ausführungsbeispiel werden durch die Datensendeeinrichtung S die Videodatenströme V0 und V2 zum Client C1 die Videodatenströme V0 und V1 zum Client C2 sowie die Videodatenströme V1 und V2 zur eigenen Video-Ein/Ausgabe IO des Clients C0 übertragen.

Der erfindungsgemäße Client C0 sowie die angegebenen Verfahrensvarianten lassen sich mit geringem Aufwand effizient realisieren, da gängige Architekturen zur Videointegration auf Basis der TCP/IP-Protokollfamilie ein Mischen von Videodatenströmen sowie einen Aufbau von Peer-to-Peer-Videoverbindungen durch bereitgestellte Anwendungsschnittstellen, wie z.B. das sog. "Java Media Framework" der Fa. Sun Microsystems, unterstützen.

Aufgrund der lokalen Steuerung der Konferenzschaltung und der Verteilung der Kommunikationsdatenströme V0, V1, V2 durch eine an der Konferenzschaltung beteiligte Endeinrichtung, hier C0, lässt sich die Erfindung sehr flexibel und kostengünstig in bestehende Kommunikationssysteme implementieren.

## Patentansprüche

1. Verfahren zum Verteilen von Kommunikationsdatenströmen (V0, V1, V2) im Rahmen einer Mehrpunktverbindung zwischen einer ersten Endeinrichtung (C0) und weiteren Endeinrichtungen (C1, C2), wobei
die weiteren Endeinrichtungen (C1, C2) jeweils einen Kommunikationsdatenstrom (V1, V2) zur ersten Endeinrichtung (C0) übertragen, und
die erste Endeinrichtung (C0) die empfangenen Kommunikationsdatenströme (V1, V2) sowie einen von der ersten Endeinrichtung selbst stammenden Kommunikationsdatenstrom (V0) dergestalt an die weiteren Endeinrichtungen (C1, C2) überträgt, dass jede der weiteren Endeinrichtungen (C1, C2) die von den jeweils anderen Endeinrichtungen stammenden Kommunikationsdatenströme empfängt.

2. Verfahren nach Anspruch 1,
**dadurch gekennzeichnet,**
**dass** die Mehrpunktverbindung von der ersten Endeinrichtung (C0) durch einen Aufbau von Zweipunktverbindungen zu den weiteren Endeinrichtungen (C1, C2) initiiert wird, und die Kommunikationsdatenströme (V0, V1, V2) über die aufgebauten Zweipunktverbindungen übertragen werden.

3. Verfahren nach Anspruch 2,
**dadurch gekennzeichnet,**
**dass** die von der ersten Endeinrichtung (C0) zu einer der weiteren Endeinrichtungen (C1, C2) zu übertragenden Kommunikationsdatenströme zusammen über eine gemeinsame Zweipunktverbindung übertragen werden.

4. Verfahren nach Anspruch 2,
**dadurch gekennzeichnet,**
**dass** die von der ersten Endeinrichtung (C0) zu einer der weiteren Endeinrichtungen (C1, C2) zu übertragenden Kommunikationsdatenströme über separate Zweipunktverbindungen übertragen werden.

5. Verfahren nach einem der Ansprüche 2 bis 4,
**dadurch gekennzeichnet,**
**dass** die Zweipunktverbindungen als sog. Peer-to-Peer-Verbindungen aufgebaut werden.

6. Verfahren nach einem der vorhergehenden Ansprüche,
**dadurch gekennzeichnet,**
**dass** im Rahmen des Empfangs der Kommunikationsdatenströme durch die erste Endeinrichtung (C0) auch der von dieser selbst stammende Kommunikationsdatenstrom (V0) logisch von der ersten Endeinrichtung (C0) empfangen wird.

7. Verfahren nach einem der vorhergehenden Ansprüche,
**dadurch gekennzeichnet,**
**dass** im Rahmen des Übertragens der Kommunikationsdatenströme durch die erste Endeinrichtung (C0) die von den weiteren Kommunikationseinrichtungen (C1, C2) stammenden Kommunikationsdatenströme (V1, V2) logisch an die erste Kommunikationseinrichtung (V0) übertragen werden.

8. Verfahren nach einem der vorhergehenden Ansprüche,
**dadurch gekennzeichnet,**
**dass** die Kommunikationsdatenströme (V0, V1, V2) über ein paketorientiertes Kommunikationsnetz (KN) übertragen werden.

9. Verfahren nach einem der vorhergehenden Ansprüche,
**dadurch gekennzeichnet,**
**dass** die Mehrpunktverbindung eine Videokonferenzschaltung ist, und
**dass** als Kommunikationsdatenströme (V0, V1, V2) Videodatenströme übertragen werden.

10. Endeinrichtung (C0) zur Durchführung des Verfahrens nach einem der vorhergehenden Ansprüche,
**gekennzeichnet durch**
eine Datenempfangseinrichtung (R) zum Empfang der Kommunikationsdatenströme (V1, V2) der weiteren Endeinrichtungen (C1, C2),
eine Datenverteilungseinrichtung (D) zum Zuordnen der empfangenen Kommunikationsdatenströme (V1, V2) sowie des von der ersten Endeinrichtung (C0) selbst stammenden Kommunikationsdatenstroms (V0) zu den weiteren Endeinrichtungen (C1, C2), so dass jeder der weiteren Endeinrichtungen (C1, C2) die von den jeweils anderen Endeinrichtungen stammenden Kommunikationsdatenströme zugeordnet werden, und
eine Datenübertragungseinrichtung (S) zum Übertragen der einer jeweiligen weiteren Endeinrichtung (C1, C2) zugeordneten Kommunikationsdatenströme zu dieser Endeinrichtung (C1, C2).
